# EUROPÄISCHE PATENTANMELDUNG

(11) **EP 1 321 327 A2**
(43) Veröffentlichungstag der Anmeldung: **25.06.2003**
(21) Anmeldenummer: 02014122.2
(22) Anmeldetag: 25.06.2002
(51) Int. Cl.: B60K 17/34, B60K 17/22

(54) **Längs eingebauter Antriebsstrang**

(30) Priorität: 18.12.2001 DE 10162337
(71) Anmelder: DaimlerChrysler AG, 70567 Stuttgart (DE)
(72) Erfinder: Gansloser, Philip, 73340 Amstetten (DE); Nied, Hartmut, 71336 Waiblingen (DE); Schröder, Rolf, 70619 Stuttgart (DE); Wörner, Günter, 71394 Kernen (DE)

(57) **Zusammenfassung**

Die Erfindung betrifft einen längs eingebauten Antriebsstrang für allradgetriebene Kraftfahrzeuge. Zum einen wird vorgeschlagen, einen Seitenabtrieb (116) für den Vorderachsantrieb mit einem Zahnradpaar (117,118) auszugestalten. Zum anderen wird vorgeschlagen, eine Gelenkwelle (110) des Seitenabtriebes mit einem Gelenk (140,142,143) zu versehen, welches innerhalb eines Zahnrades der Zahnradpaarung angeordnet ist.

## Beschreibung

Die Erfindung betrifft einen längs eingebauten Antriebsstrang nach dem Patentanspruch 1.

Aus "Bohner, Max: Fachkunde Kraftfahrzeugtechnik, 26. Auflage, Verlag Europa-Lehrmittel, 1999, S. 382" ist bereits ein längs eingebauter Antriebsstrang für ein allradgetriebenes Kraftfahrzeug bekannt, bei welchem mittels eines Verteilergetriebes ein Antriebsmoment zum einen auf eine Hinterachse und zum anderen über eine winkelig zur Antriebsstranglängsachse angeordnete Welle auf ein Vorderachse übertragbar ist.

Ferner zeigt die nicht vorveröffentlichte DE 101 33 118.5 einen längs eingebauten Antriebsstrang für ein Kraftfahrzeug, bei welchem mittels eines Verteilergetriebes ein Antriebsmoment zum einen auf eine Hinterachse und zum anderen über eine winkelig zur Antriebsstranglängsachse angeordnete Welle auf ein Vorderachse übertragbar ist.

Die US 4,289,213 zeigt einen längs eingebauten Antriebsstrang für ein Kraftfahrzeug, bei welchem mittels eines Verteilergetriebes ein Antriebsmoment zum einen auf eine Hinterachse und zum anderen über eine winkelig zur Antriebsstranglängsachse angeordnete Welle auf ein Vorderachse übertragbar ist.

Die gattungsfremde DE 199 04 960 C1 zeigt einen Feldhäcksler mit einem Kreuzgelenk, welches innerhalb eines Zahnrades angeordnet ist.

Aufgabe der Erfindung ist es, einen wirkungsgradoptimierten längs eingebauten Antriebsstrang für ein allradgetriebenes Kraftfahrzeug zu schaffen, der in einen schmalen Fahrzeugtunnel integrierbar ist und dennoch kleine Knickwinkel der Gelenkwelle aufweist.

Diese Aufgabe wird erfindungsgemäß durch die Merkmale des längs eingebauten Antriebsstranges von Patentanspruch 1 gelöst.

Die Erfindung geht aus von einem Antriebsstrang für ein Kraftfahrzeug, der zusätzlich zu einem Antriebsmotor ein für einen Längseinbau vorgesehenes Kraftfahrzeuggetriebe mit einer im eingebauten Zustand zum Heck des Kraftfahrzeugs weisenden Getriebeausgangswelle aufweist, die über eine verschwenkt angeordnete Abtriebswelle eines Seitenabtriebs und über eine Gelenkwelle antriebsmäßig mit einer Ritzelwelle eines Vorderachsgetriebes verbindbar ist.

Ein Vorteil der Erfindung ist der, dass der Knickwinkel der Gelenkwelle sehr gering gehalten wird, da durch die Anordnung eines Gelenkes dieser Gelenkwelle innerhalb des Abtriebsritzels des Seitenabtriebes ein großer Abstand zwischen den Gelenken der Gelenkwelle erreicht wird. Durch den geringen Knickwinkel werden neben Einbauvorteilen im Fahrzeugtunnel Wirkungsgradvorteile erzielt, da das Gelenk weniger mit Reibung belastet wird. Der Abstand zwischen der Gelenkwelle und dem Getriebegehäuse wird damit in vorteilhafter Weise durch den dünnen Außendurchmesser der Gelenkwelle und nicht dem dicken Außendurchmesser des Gelenkes bestimmt. Damit ist zuvor genannter Abstand in vorteilhafter Weise geringst möglich. In vorteilhafter Weise reicht der relativ kleine Fahrzeugtunnel eines hinterachsgetriebenen Kraftfahrzeuges auch für den allradantreibenden Antriebsstrang aus. Ferner können in vorteilhafter Weise die Stirnräder des Seitenabtriebes im Durchmesser klein dargestellt werden. Dadurch ist der Seitenabtrieb in vorteilhafter Weise kostengünstig und leicht.

Ferner ist ein weiterer Vorteil der Anordnung des Gelenkes innerhalb des Abtriebsritzels der, dass die Gelenkwelle ohne schützendes Gehäuse zum Vorderachsgetriebe geführt werden kann, da das eine Gelenk innerhalb des Abtriebsritzels zumindest zum Teil vor Umwelteinflüssen geschützt ist.

Ein Vorteil der Ausgestaltung gemäß Patentanspruch 2 ist der, dass durch die Verwendung ausschließlich einer Zahnradstufe, welche ein Antriebsritzel und ein Abtriebsritzel umfasst, ein besonders günstiger Wirkungsgrad erreicht wird. Insbesondere durch die Integration des Abtriebsritzels in ein gemeinsames Gehäuse mit dem Antriebsritzel und dem Verteilergetriebe werden Verluste auf einem geringstmöglichen Niveau gehalten. So wird ein gemeinsamer Schmier- und Kühlmittelkreislauf genutzt und die Lager
- des Abtriebsritzels,
- des Antriebsritzels und
- des Verteilergetriebes
sind unmittelbar gegeneinander abstützbar, so dass ein stets exakter Zahneingriff der einzelnen Verzahnungen gewährleistet ist.

Patentansprüche 3 und 4 zeigen besonders vorteilhafte Ausgestaltungen der Erfindungen, bei welchen die übliche Antriebsmotordrehrichtung berücksichtigt ist, so dass der erfindungsgemäße Antriebsstrang als alternatives sogenanntes "add-on-Prinzip" parallel zu einem heckgetriebenen Fahrzeug produziert werden kann, was mit Kostenvorteilen einhergeht.

Ferner weisen die Ausgestaltungen gemäß den Patentansprüchen 3 und 4 den Vorteil auf, dass das angetriebene Zahnrad des Vorderachsgetriebes, welches üblicherweise ein Tellerrad ist, sehr nahe am Antriebsmotor gelagert und abgestützt werden kann. Damit gehen Montage und Wirkungsgradvorteile einher.

Gemäß Patentanspruch 5 und 6 kann zur Entlastung der Gelenke der Gelenkwelle wenigstens ein mit der Gelenkwelle verbundenes Abtriebsritzel zur Getriebeausgangswelle des Kraftfahrzeuggetriebes verschwenkt sein. Damit gehen neben den Einbauvorteilen Wirkungsgradvorteile insbesondere am Gelenk einher.

Die Weiterbildung des Antriebsstranges gemäß den Patentansprüchen 7 und 8, welche einen bestimmten Achsenwinkel am Vorderachsgetriebe zum Gegenstand haben, geht mit Vorteilen der Verringerung der Baugröße und Wirkungsgradvorteilen einher, da in diesen Fällen das Gelenk der Gelenkwelle im Bereich des Vorderachsgetriebes entlastet wird.

Die erfindungsgemäße Lösung kann bei manuellen Schaltgetrieben, bei automatisierten Schaltgetrieben und insbesondere bei Automatikgetrieben eingesetzt werden. Besonders vorteilhaft ist die erfindungsgemäße Lösung bei Allradantrieben anwendbar, die ein für einen Heckantrieb konzipiertes Kraftfahrzeuggetriebe, insbesondere Automatikgetriebe, aufweisen, d.h. bei denen die Getriebeausgangswelle mit einer Ritzelwelle eines Hinterachsgetriebes antriebsmäßig verbindbar ist, und die Getriebeausgangswelle nach dem sogenannten "add-on-Prinzip" über eine Abtriebswelle eines Seitenabtriebs und über eine Gelenkwelle antriebsmäßig mit einer Ritzelwelle eines Vorderachsgetriebes verbindbar ist. Trotz eines im wesentlichen auf einen reinen Heckantrieb ausgelegten Kraftfahrzeuggetriebes kann bei kleinen Knickwinkeln die Gelenkwelle mit einem kleinen Abstand entlang einem Gehäuse des Kraftfahrzeuggetriebes geführt werden. Rohbauänderungen an einem Tunnel für Allradvarianten eines grundsätzlich mit einem reinen Heckantrieb ausgestatteten Kraftfahrzeugs können auf ein Minimum reduziert werden oder eventuell ganz entfallen.

Vorteilhaft ist entweder die mit der Gelenkwelle korrespondierende Ritzelwelle des Vorderachsgetriebes und/oder die mit der Gelenkwelle korrespondierende Abtriebswelle des Seitenabtriebs zur Getriebeausgangswelle verschwenkt ausgeführt, und zwar jeweils vertikal und/oder horizontal.

Anstatt die Ritzelwelle des Vorderachsgetriebes oder die Abtriebswelle des Seitenabtriebs zu verschwenken, ist in Weiterbildung der Erfindung gemäß Patentanspruch 2 grundsätzlich auch denkbar, verschwenkte Zwischenwellen vorzusehen.

Um die Ritzelwelle des Vorderachsgetriebes und/oder die Abtriebswelle des Seitenabtriebs zu verschwenken, sind sämtliche, dem Fachmann als sinnvoll erscheinende Konstruktionen denkbar.

Insbesondere kann jedoch eine verschwenkte Ritzelwelle des Vorderachsgetriebes erreicht werden, indem entweder das gesamte Vorderachsgetriebe verschwenkt angeordnet ist, wodurch ein kostengünstiges Standardvorderachsgetriebe verwendet werden kann, oder indem das Vorderachsgetriebe vorteilhaft ein Winkelgetriebe mit einem Kreuzwinkel ungleich 90° aufweist. Im letzteren Fall können Seitenwellen des Kraftfahrzeugs standardmäßig ausgeführt werden.

Eine verschwenkte Abtriebswelle des Seitenabtriebs kann vorteilhaft erreicht werden, indem der Seitenantrieb als Winkelgetriebe mit Kegelrädern ausgeführt ist, die zumindest im wesentlichen senkrecht aufeinander stehende Rotationsachsen aufweisen, wodurch kostengünstige Standardzahnräder verwendet werden können.

In Weiterbildung der Erfindung gemäß Patentanspruch 2 kann die verschwenkte Abtriebswelle des Seitenabtriebs auch erreicht werden, indem der Seitenabtrieb als Räderkette mit zumindest drei Zahnrädern ausgebildet ist, wobei zumindest ein Zahnrad kegelig ausgeführt ist. Ein als Räderkette ausgeführter Seitenabtrieb kann gegenüber einem als Winkelgetriebe ausgeführten Seitenabtrieb mit im wesentlichen senkrecht aufeinander stehenden Rotationsachsen besonders platzsparend ausgeführt werden.

Besitzt das Kraftfahrzeuggetriebe ein Getriebegehäuse mit einer angeformten Lagereinheit für den Seitenabtrieb, kann ein zusätzliches Zwischengehäuse zwischen dem Kraftfahrzeuggetriebe und dem Seitenabtrieb vermieden und es können zusätzliche Bauteile, Bauraum, Montageaufwand und Kosten eingespart werden.

Weitere Vorteile ergeben sich aus der folgenden Zeichnungsbeschreibung. In der Zeichnung sind mehrere Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1 bis Fig. 4: in vier alternativen Ausführungsbeispielen in einem Teilbereich eine schematische Darstellung eines erfindungsgemäßen längs eingebauten Antriebsstranges für ein Kraftfahrzeug,
- Fig. 5: ein Lagergehäuse, welches bei einem Antriebsstrang gemäß Fig. 3 oder Fig. 4 Anwendung findet,
- Fig. 6: einen Teilbereich des schematisch in Fig. 3 dargestellten Automatikgetriebes,
- Fig. 7: einen detaillierten Seitenabtrieb, welcher insbesondere bei einem Antriebsstrang gemäß Fig. 3 oder Fig. 4 Anwendung finden kann,
- Fig. 8: eine weitere Ausführungsform in einer detaillierten und geschnittenen Darstellung ähnlich der aus Fig. 7, wobei jedoch anstelle eines Kreuzgelenkes ein anderer Gelenktyp Anwendung findet und ein Planeten-Differentialgetriebe ersichtlich ist und
- Fig. 9: eine weitere Ausführungsform in einer detaillierten und geschnittenen Darstellung ähnlich der aus Fig. 8, wobei jedoch für das Verteilergetriebe anstelle eines Planeten-Differentialgetriebes eine Lamellenkupplung Anwendung findet.

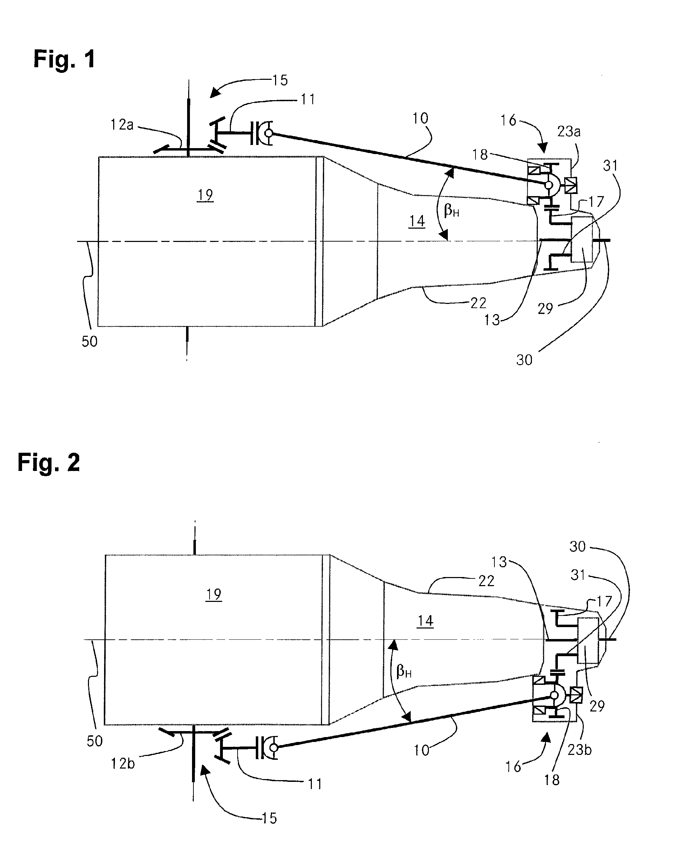

Im folgenden werden die Gemeinsamkeiten der alternativen vier Ausführungsbeispiele gemäß Fig. 1 bis Fig. 4 dargestellt.

Fig. 1 bis Fig. 4 zeigen jeweils in einem Teilbereich eine schematische Darstellung eines erfindungsgemäßen längs eingebauten Antriebsstranges für ein Kraftfahrzeug, der einen Antriebsmotor 19 und ein Automatikgetriebe 14 mit einer im eingebauten Zustand zum Heck des Kraftfahrzeugs weisenden Getriebeausgangswelle 13 aufweist. Der Antriebsstrang ist im wesentlichen entlang einer Antriebsstranglängsachse 50 ausgerichtet.

Das Automatikgetriebe 14 ist grundsätzlich für einen reinen Heckantrieb konzipiert. Die Getriebeausgangswelle 13 ist im eingebauten Zustand des Automatikgetriebes 14 mit einer nicht näher dargestellten Eingangswelle eines Hinterachsgetriebes antriebsmäßig verbunden.

Das Automatikgetriebe 14 besitzt ein Getriebegehäuse 22 mit einem angeformten Lagergehäuse 23a bzw. 23b bzw. 23c bzw. 23d für einen Seitenabtrieb 16, so dass das Automatikgetriebe 14 kostengünstig nach einem sogenannten "add-on-Prinzip" für eine Allradvariante nutzbar ist.

Bei einer derartigen Variante ist die gegenüber der reinen Heckantriebsvariante verlängerte Getriebeausgangswelle 13 über ein Verteilergetriebe 29 und eine Heckantriebsgelenkwelle 30 mit der Ritzelwelle des Hinterachsgetriebes derart verbunden, dass ein erster Teil des Antriebsmomentes auf das Hinterachsgetriebe übertragen wird. Ein zweiter Teil des Antriebsmomentes wird von der Getriebeausgangswelle 13 über
- das Verteilergetriebe 29,
- ein Antriebsritzel 17,
- eine Gelenkwelle 10 des Seitenabtriebs 16 und
- eine Kegelritzelwelle 11 eines Vorderachsgetriebes 15 auf eine Vorderachse übertragen. Mittels des Verteilergetriebes 29 sind Abtriebsmomente auf das Vorderachsgetriebe 15 und das Hinterachsgetriebe verteilbar sowie Drehzahldifferenzen ausgleichbar.

Die Gelenkwelle 10 des Seitenabtriebs 16 ist horizontal um einen Winkel von ca. 8° zur Getriebeausgangswelle 13 verschwenkt, und zwar jeweils in Richtung zur Kegelritzelwelle 11 des Vorderachsgetriebes 15. Die Gelenkwelle 10 des Seitenabtriebs 16 ist vertikal um einen Winkel von ca. 4° zur Getriebeausgangswelle 13 verschwenkt, und zwar in Richtung zur Kegelritzelwelle 11 des Vorderachsgetriebes 15. Dabei ist in der Zeichnung nur der Winkel β_{H} in der Horizontalen ersichtlich.

Der Seitenabtrieb 16 wird von zwei Zahnrädern gebildet, und zwar von einem Antriebsritzel 17, und einem mit diesem kämmenden Abtriebsritzel 18. Das Antriebsritzel 17 ist mittels einer Hohlwelle 31 mit einem Getriebeglied des Verteilergetriebes 29 drehfest verbunden. Innerhalb dieser Hohlwelle 31 verläuft die Getriebeausgangswelle 13. Das Abtriebsritzel 18 ist mittels einer angestellten Kegelrollenlagerung in x-Anordnung in dem Lagergehäuse 23a bzw. 23b bzw. 23c bzw. 23d gelagert.

Zur Herstellung des horizontalen Winkels β_{H} und des nicht näher dargestellten vertikalen Winkels ist die Gelenkwelle 10 mittels eines Kreuzgelenkes gelenkig radial innerhalb des Abtriebsritzels 18 angeordnet. Ferner ist die Gelenkwelle 10 in Fahrtrichtung vorn - d.h. an deren anderem Ende - mit einem weiteren Kreuzgelenk gelenkig an die Kegelritzelwelle 11 gekoppelt.

Bei dem Antriebsstrang gemäß Fig. 1 sind das Antriebsritzel 17 und das mit diesem kämmende Abtriebsritzel 18 jeweils als Stirnrad ausgeführt. Die Gelenkwelle 10 ist auf der in Fahrtrichtung rechts liegenden Seite des Antriebsmotors 19 angeordnet. Ein Tellerrad 12a des Vorderachsgetriebes 15 ist auf der dem Antriebsmotor 19 zugewandten - d.h. der in Fahrtrichtung linken - Seite des Vorderachsgetriebes 15 angeordnet.

Bei dem Antriebsstrang gemäß Fig. 2 sind das Antriebsritzel 17 und das mit diesem kämmende Abtriebsritzel 18 jeweils als Stirnrad ausgeführt. Die Gelenkwelle 10 ist auf der in Fahrtrichtung links liegenden Seite des Antriebsmotors 19 angeordnet. Ein Tellerrad 12b des Vorderachsgetriebes 15 ist auf der dem Antriebsmotor 19 zugewandten - d.h. der in Fahrtrichtung rechten - Seite des Vorderachsgetriebes 15 angeordnet.

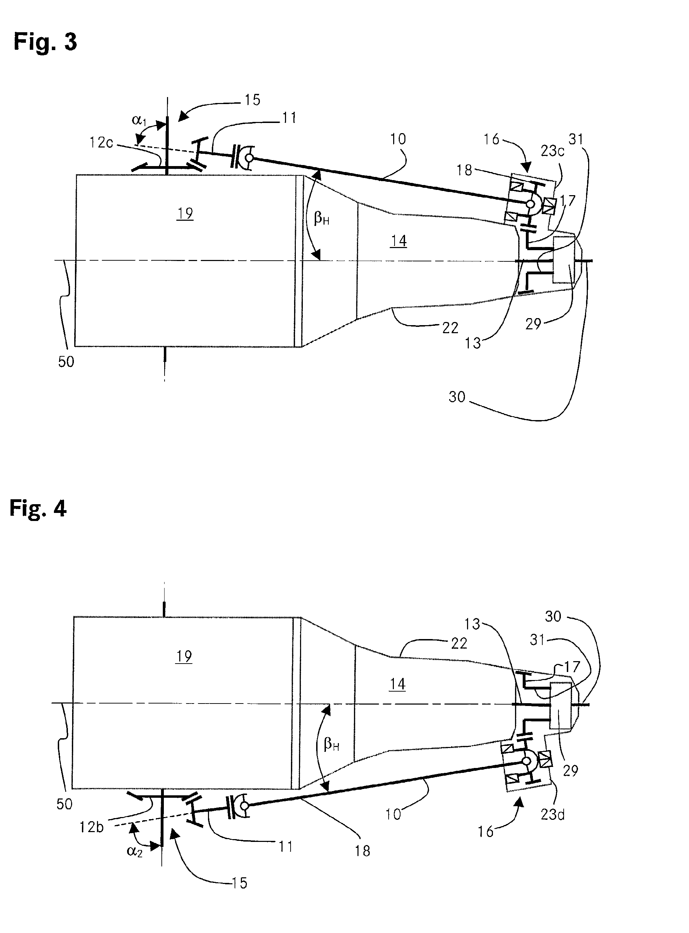

Bei dem Antriebsstrang gemäß Fig. 3 sind das Antriebsritzel 17 und das mit diesem kämmende Abtriebsritzel 18 jeweils als kegeliges Stirnrad ausgeführt. Ein Achsenwinkel dieser kegeligen Stirnräder ist dabei gleich dem horizontalen Winkel β_{H}. Ferner ist ein Achsenwinkel α₁ eines Tellerrades 12c und der Kegelritzelwelle 11 um den Winkel β_{H} kleiner als 90°, so dass die Kegelritzelwelle 12c und die Gelenkwelle 10 in einer gemeinsamen vertikalen Ebene liegen. Die Gelenkwelle 10 ist auf der in Fahrtrichtung rechts liegenden Seite des Antriebsmotors 19 angeordnet. Das Tellerrad 12c des Vorderachsgetriebes 15 ist auf der dem Antriebsmotor 19 zugewandten - d.h. der in Fahrtrichtung linken - Seite des Vorderachsgetriebes 15 angeordnet.

Bei dem Antriebsstrang gemäß Fig. 4 sind das Antriebsritzel 17 und das mit diesem kämmende Abtriebsritzel 18 jeweils als kegeliges Stirnrad ausgeführt. Ein Achsenwinkel dieser kegeligen Stirnräder ist dabei gleich dem horizontalen Winkel β_{H}. Ferner ist ein Achsenwinkel α₂ zwischen einem Tellerrad 12d und der Kegelritzelwelle 11 um den Winkel β_{H} kleiner als 90°, so dass die Kegelritzelwelle 12d und die Gelenkwelle 10 in einer gemeinsamen vertikalen Ebene liegen. Die Gelenkwelle 10 ist auf der in Fahrtrichtung links liegenden Seite des Antriebsmotors 19 angeordnet. Das Tellerrad 12d des Vorderachsgetriebes 15 ist auf der dem Antriebsmotor 19 zugewandten - d.h. der in Fahrtrichtung rechten - Seite des Vorderachsgetriebes 15 angeordnet.

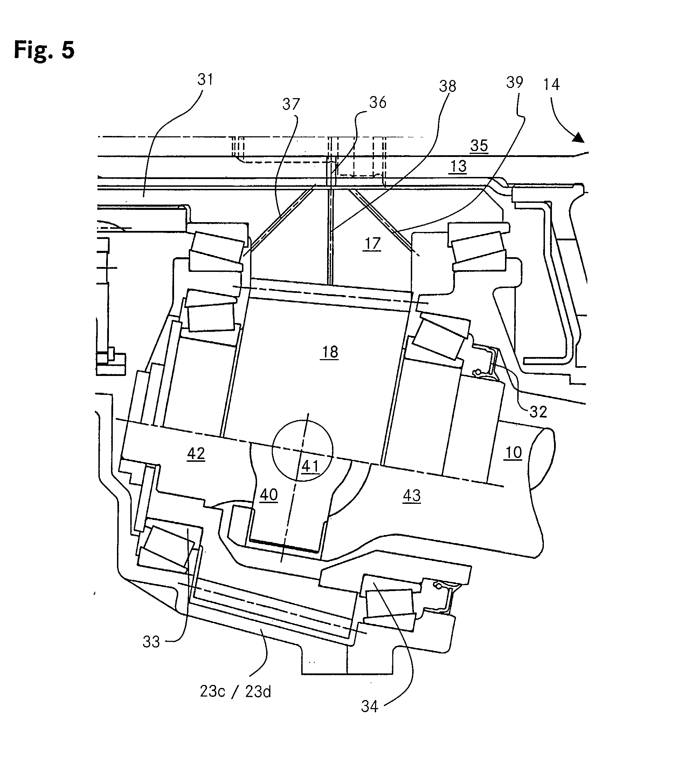

Fig. 5 zeigt ein Lagergehäuse 23c bzw. 23d in einer geschnittenen Darstellung. Das Lagergehäuse 23c bzw. 23d findet in einem Antriebsstrang gemäß Fig. 3 oder alternativ Fig. 4 Anwendung. Das Antriebsritzel 17 und das mit diesem kämmende Abtriebsritzel 18 sind jeweils als kegeliges Stirnrad ausgeführt. Ein Achsenwinkel dieser kegeligen Stirnräder ist dabei gleich dem horizontalen Winkel β_{H}.

Die Getriebeausgangswelle 13 ist als Hohlwelle ausgestaltet und koaxial zu der radial äußeren Hohlwelle 31 angeordnet, wobei zwischen den beiden Hohlwellen ein Ringkanal verbleibt. Das Antriebsmoment des nur teilweise ersichtlichen Automatikgetriebes 14 wird in das in Fig. 5 nicht ersichtliche Verteilergetriebe 29 eingespeist, welches das Antriebsmoment einerseits auf die nicht näher dargestellte Ritzelwelle des Hinterachsgetriebes und andererseits auf die Hohlwelle 31 verteilt. Diese Hohlwelle 31 ist einteilig mit dem Antriebsritzel 17 ausgestaltet und mittels einer Kegelrollenlagerung in x-Anordnung in dem Lagergehäuse 23c bzw. 23d gelagert. Das Lagergehäuse 23c bzw. 23d nimmt ferner die Kegelrollenlagerung in x-Anordnung, in welcher das Abtriebsritzel 18 gelagert ist, auf. Das Abtriebsritzel 18 weist mehrere Absätze auf, auf denen zum einen die Lagerinnenringe 33, 34 der Kegelrollenlagerung koaxial aufgesetzt sind und zum anderen ein Radialwellendichtring 32 anliegt. Dieser in das Lagergehäuse 23c bzw. 23d eingesetzte Radialwellendichtring 32 verhindert, dass ein Schmiermittel zur Schmierung
- der beiden Kegelrollenlagerungen in x-Anordnung und
- des Zahneingriffes zwischen den beiden kegeligen Stirnrädern
aus dem Lagergehäuse 23c bzw. 23d austritt.

Zur Versorgung mit Schmiermittel weist die Getriebeausgangswelle 13 zusätzlich zu einem zentralen Schmiermittelkanal 35 eine Querbohrung 36 auf, mittels welcher Schmier- und Kühlmittel vom zentralen Schmiermittelkanal 35 in den Ringkanal geleitet wird. Von diesem fließen Teilströme durch strahlenförmig in das Stirnrad des Antriebsritzels 17 gebohrte Versorgungsbohrungen 37, 38, 39. Diese Versorgungsbohrungen 37, 38, 39 verlaufen zum einen zu den beiden Kegelrollenlagern der Kegelrollenlagerung des Antriebsritzels 17 und zum anderen zum Zahneingriff zwischen den beiden kegeligen Stirnrädern.

Das Kreuzgelenk ist radial innerhalb des Abtriebsritzels 18 angeordnet. Dabei sind Achsen von zwei Bolzen 40, 41 des Kreuzgelenkes in axialer Richtung des Stirnrades des Abtriebsritzels 18 genau mittig angeordnet. Die beiden Bolzen 40, 41 bilden ein Achsenkreuz. Der eine Bolzen 41 ist in einer Gelenkhälfte 42 des Kreuzgelenkes drehbar gelagert und axial abgestützt. Diese Gelenkhälfte 42 ist mit dem Stirnrad des Abtriebsritzels 18 bewegungsfest verbunden. Der andere Bolzen 41 ist in einer anderen Gelenkhälfte 43 des Kreuzgelenkes drehbar gelagert und axial abgestützt. Diese Gelenkhälfte 43 ist mit der Gelenkwelle 10 bewegungsfest verbunden. Somit ragt die Gelenkwelle 10 aus dem Lagergehäuse 23c bzw. 23d heraus, wohingegen das Kreuzgelenk vor direkten Umwelteinflüssen geschützt innerhalb des Lagergehäuses 23c bzw. 23d angeordnet ist.

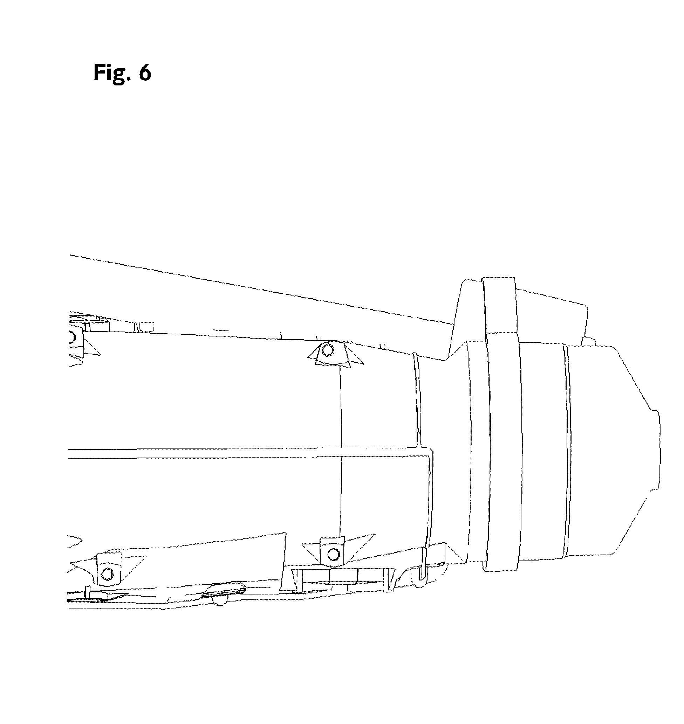

Fig. 6 zeigt einen Teilbereich des schematisch in Fig. 3 dargestellten Automatikgetriebes und

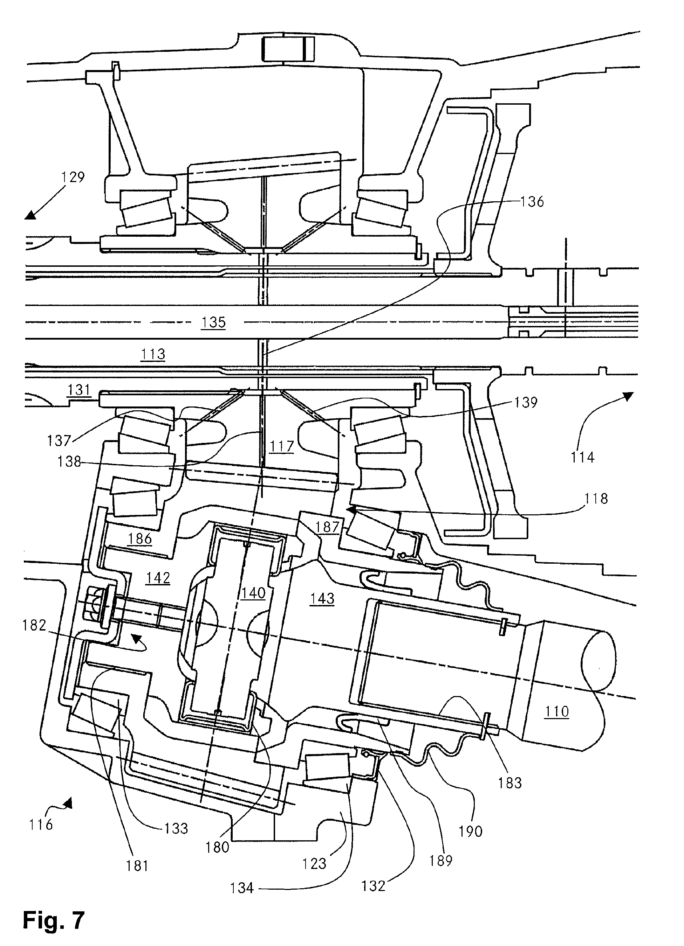

Fig. 7 zeigt einen Seitenabtrieb 116 mit einem Lagergehäuse 123 in einer geschnittenen Darstellung. Das Lagergehäuse 123 kann insbesondere in einem Antriebsstrang gemäß Fig. 3 oder alternativ Fig. 4 Anwendung findet. Ein Antriebsritzel 117 und ein mit diesem kämmendes Abtriebsritzel 118 sind jeweils als kegeliges Stirnrad ausgeführt. Ein Achsenwinkel dieser kegeligen Stirnräder ist dabei gleich einem horizontalen Winkel β_{H} einer Gelenkwelle 110 des Seitenabtriebs 116.

Eine Getriebeausgangswelle 113 ist als Hohlwelle ausgestaltet und koaxial zu einer radial äußeren Hohlwelle 131 angeordnet, wobei zwischen den beiden Hohlwellen ein Ringkanal verbleibt. Das Antriebsmoment eines nur teilweise ersichtlichen Automatikgetriebes 114 wird in ein in Fig. 7 nicht ersichtliches Verteilergetriebe 129 eingespeist, welches das Antriebsmoment einerseits auf eine nicht näher dargestellte Ritzelwelle eines Hinterachsgetriebes und andererseits auf die Hohlwelle 131 verteilt. Diese Hohlwelle 131 ist einteilig mit dem Antriebsritzel 117 ausgestaltet und mittels einer Kegelrollenlagerung in x-Anordnung in dem Lagergehäuse 123 gelagert. Das Lagergehäuse 123 nimmt ferner die Kegelrollenlagerung in x-Anordnung, in welcher das Abtriebsritzel 118 gelagert ist, auf. Das Abtriebsritzel 118 umfasst zwei Abtriebsritzelhälften 186, 187, welche mehrere Absätze aufwiesen, auf denen zum einen die Lagerinnenringe 133, 134 der Kegelrollenlagerung koaxial aufgesetzt sind und zum anderen ein Radialwellendichtring 132 anliegt. Dieser in das Lagergehäuse 123 eingesetzte Radialwellendichtring 132 verhindert, dass ein Schmiermittel zur Schmierung
- der beiden Kegelrollenlagerungen in x-Anordnung und
- des Zahneingriffes zwischen den beiden kegeligen Stirnrädern
aus dem Lagergehäuse 123 austritt.

Zur Versorgung mit Schmiermittel weist die Getriebeausgangswelle 113 zusätzlich zu einem zentralen Schmiermittelkanal 135 eine Querbohrung 136 auf, mittels welcher Schmier- und Kühlmittel vom zentralen Schmiermittelkanal 135 in den Ringkanal geleitet wird. Von diesem fließen Teilströme durch strahlenförmig in das Stirnrad des Antriebsritzels 117 gebohrte Versorgungsbohrungen 137, 138, 139. Diese Versorgungsbohrungen 137, 138, 139 verlaufen zum einen zu den beiden Kegelrollenlagern der Kegelrollenlagerung des Antriebsritzels 117 und zum anderen zum Zahneingriff zwischen den beiden kegeligen Stirnrädern.

Das Kreuzgelenk ist radial innerhalb des Abtriebsritzels 118 angeordnet. Dabei sind Achsen eines Achsenkreuzes 140 des Kreuzgelenkes in axialer Richtung des Stirnrades des Abtriebsritzels 118 genau mittig angeordnet. Das Achsenkreuz 140 ist einerseits mittels Nadellagerungen, von denen lediglich die Lagerkäfig 180 ersichtlich sind, in einer Gelenkhälfte 142 des Kreuzgelenkes drehbar gelagert. Zum anderen ist das Achsenkreuz 140 drehbar in einer anderen Gelenkhälfte 143 des Kreuzgelenkes gelagert.

Die eine Gelenkhälfte 142 ist
- mittels einer Keilwellenverbindung 181 drehfest und
- mittels einer Schraubverspannung 182 axial fest mit dem Abtriebsritzel 118 verbunden.

Die andere Gelenkhälfte 143 ist
- mittels einer Keilwellenverbindung 183 drehfest und
- mittels eines Axialsicherungsringes 184 axial fest mit der Gelenkwelle 110 verbunden.

Über die teilweise aus der einen Abtriebsritzelhälfte 187 und dem Lagergehäuse 123 hinausragende andere Gelenkhälfte 143 ist ein Ende eines elastischen Faltenbalges 190 gestülpt, dessen anderes Ende in eine Außennut der Abtriebsritzelhälfte 187 eingreift, so das ein Innenraum des Abtriebsritzels 118 und damit das in diesem aufgenommene Kreuzgelenk bzw. eine für dieses vorgesehene Fettfüllung vor Schmutz und Spritzwasser geschützt ist. Alternativ oder zusätzlich kann zum Schutz der Fettfüllung vor Schmutz und Spritzwasser eine Dichtlippe 189 vorgesehen sein. Diese Dichtlippe 189 ist zwischen der Innenseite der Abtriebsritzelhälfte 187 und der Außenseite der anderen Gelenkhälfte 143 verspannt.

Durch die in den Ausführungsbeispielen dargestellten Geometrien kann der Antriebsstrang für ein allradgetriebenes Kraftfahrzeug platzsparend in einem schmalen Fahrzeugtunnel integriert werden.

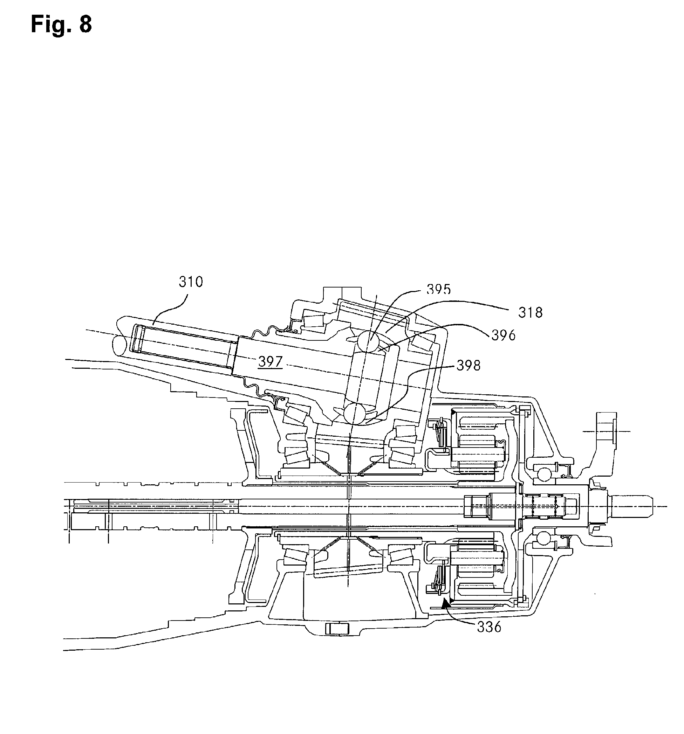

Fig. 8 zeigt eine detailliert und geschnitten dargestellte Getriebevorrichtung ähnlich der aus Fig. 7, wobei jedoch anstelle des Kreuzgelenkes ein anderer Gelenktyp Anwendung findet. Bei diesem homokinetischen Gelenktyp sind gerundete Nutenbahnen 398 in ein Abtriebsritzel 318 eingearbeitet. Die Nutenbahnen 398 erstrecken sich im wesentlichen parallel zur Rotationsachse des Abtriebsritzels 318, welches als hohle außenverzahnte Welle ausgeführt ist. Korrespondierend zu diesen Nutenbahnen 398 weist ein mit der Gelenkwelle 310 verbundenes Gelenkteil 397 Aufnahmenuten 396 zur Aufnahme von Kugeln 395 auf. Über diese Kugeln 395 wird das Antriebsmoment für die Vorderachse übertragen.

Ferner ist in der Fig. 8 ein als Planeten-Differentialgetriebe ausgeführtes Verteilergetriebe ersichtlich.

Ferner ist zur Dämpfung von Lastschlägen eine temperaturabhängig drehmomentdämpfende Reibkupplung 336 vorgesehen. Eine solche temperaturabhängige Reibkupplung 336 ist in der nicht vorveröffentlichten DE 101 11 257.2 beschrieben. Ein Sonnenrad und ein Planetenträger des Differentialgetriebes sind mittels der Reibkupplung 336 miteinander gekuppelt. Das schlupffrei übertragbare Kupplungsdrehmoment der Reibkupplung 336 ist so klein ist, dass diese bei Drehmomentstößen und bei Drehmomentdifferenzen, wie sie bei üblichem Kraftfahrzeugbetrieb normalerweise zwischen den beiden Differentialteilen auftreten, automatisch in Reibungs-Schlupfbetrieb geht. Die Reibkupplung 336 ist mit einem temperaturabhängigen Einstellmittel versehen, welches in einem vorbestimmten Temperaturbereich den Kupplungsschließdruck und damit das übertragbare Kupplungsdrehmoment abhängig von der Kupplungstemperatur mit steigender Kupplungstemperatur verkleinert und mit abnehmender Kupplungstemperatur erhöht.

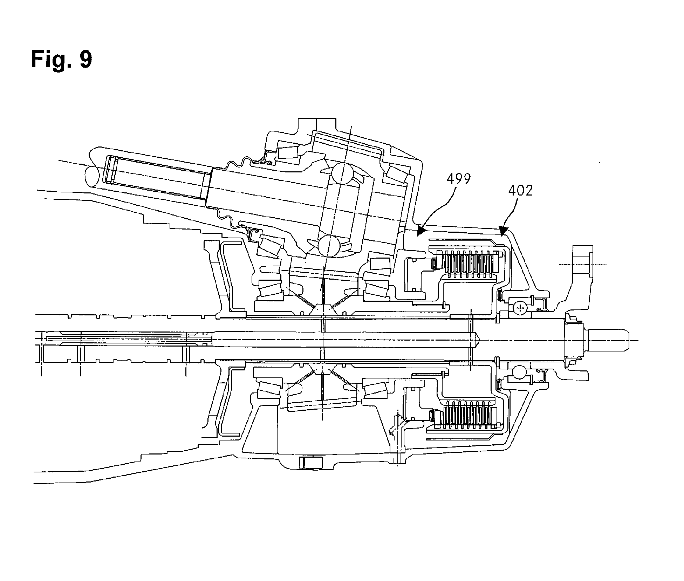

Fig. 9 zeigt eine detailliert und geschnitten dargestellte Getriebevorrichtung ähnlich der aus Fig. 8, wobei jedoch für das Verteilergetriebe anstelle eines Differentialgetriebes eine im Ölbad laufende Lamellenkupplung 402 Anwendung findet.

Grundsätzlich ist in weiteren alternativen Ausgestaltungen der Einsatz von sämtlichen bekannten homokinetischen Gelenken möglich. So bieten sich beispielsweise auch Doppeloffset-/Kugel-/Receppa-/Tripoden- und Ringgelenke an.

Der in den ersten vier alternativen Ausführungsbeispielen gemäß Fig. 1 bis Fig. 4 mit 8° angegebene horizontale Winkel β_{H} der Gelenkwelle des Seitenabtriebs kann insbesondere in einem Bereich von 8° bis 9° liegen. Ferner kann der in den ersten vier alternativen Ausführungsbeispielen Fig. 1 bis Fig. 4 mit 4° angegebene vertikale Winkel der Gelenkwelle des Seitenabtriebs insbesondere in einem Bereich von 4° bis 5° liegen.

Die im dritten und vierten alternativen Ausführungsbeispiel gemäß Fig. 3 und Fig. 4 aufgeführten kegeligen Stirnräder können auch als Kegelräder ausgestaltet sein.

Die in den ersten vier alternativen Ausführungsbeispielen gemäß Fig. 1 bis Fig. 4 und in Fig. 5 und Fig. 7 dargestellte Getriebeausgangswelle kann anstatt als Hohlwelle auch als Vollwelle ausgestaltet sein.

Die in den ersten vier alternativen Ausführungsbeispielen gemäß Fig. 1 bis Fig. 4 und in Fig. 5 und Fig. 7 dargestellte Hohlwelle, welche einteilig mit dem Antriebsritzel ausgeführt ist, kann auch zweiteilig ausgeführt sein.

Das Verteilergetriebe kann in das Getriebe integriert sein oder nach dem sogenannten "Add-on-Prinzip" als zusätzlich alternativ anbaubare Komponente ausgeführt sein. Das Verteilergetriebe kann mit einer festen Antriebskraftverteilung oder alternativ mit zuschaltbarer Vorderachse mittels Kupplung dargestellt werden.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Längs eingebauter Antriebsstrang für ein Kraftfahrzeug, bei welchem mittels eines Verteilergetriebes (29) ein Antriebsmoment zum einen auf eine Hinterachse und zum anderen über eine winkelig zur Antriebsstranglängsachse (50) angeordnete Gelenkwelle (10) auf ein Vorderachse übertragbar ist, wobei die teilweise Antriebsmomentübertragung vom Verteilergetriebe (29) auf die Gelenkwelle (10) über ein Antriebsritzel (17) und ein Abtriebsritzel (18) erfolgt, und wobei ein Gelenk (Kreuzgelenk) der Gelenkwelle (10) zumindest teilweise innerhalb des Abtriebsritzels (18) angeordnet ist.

2. Längs eingebauter Antriebsstrang nach Patentanspruch 1, **dadurch gekennzeichnet,**
**dass** die teilweise Antriebsmomentübertragung vom Verteilergetriebe (29) auf die Gelenkwelle (10) ausschließlich über eine das Antriebsritzel (17) und das Abtriebsritzel (18) umfassende Zahnradpaarung erfolgt.

3. Längs eingebauter Antriebsstrang nach Patentanspruch 2, **dadurch gekennzeichnet,**
**dass**
- die Gelenkwelle (10) und ein Vorderachsetriebes (15) auf der in Fahrtrichtung rechts liegenden Seite der Antriebsstranglängsachse (50) und
- ein Zahnrad (Tellerrad 12a) des Vorderachsetriebes (15) auf der der Antriebsstranglängsachse (50) zugewandten Seite des Vorderachsetriebes (15)
angeordnet ist.

4. Längs eingebauter Antriebsstrang nach Patentanspruch 2, **dadurch gekennzeichnet,**
**dass**
- die Gelenkwelle (10) und ein Vorderachsetriebes (15) auf der in Fahrtrichtung links liegenden Seite der Antriebsstranglängsachse (50) und
- ein Zahnrad (Tellerrad 12a) des Vorderachsetriebes (15) auf der der Antriebsstranglängsachse (50) zugewandten Seite des Vorderachsetriebes (15)
angeordnet ist.

5. Längs eingebauter Antriebsstrang nach Patentanspruch 2, **dadurch gekennzeichnet,**
**dass** das Antriebsritzel (17) und das mit diesem kämmende Abtriebsritzel (18) jeweils als kegeliges Stirnrad ausgeführt sind.

6. Längs eingebauter Antriebsstrang nach Patentanspruch 5, **dadurch gekennzeichnet,**
**dass** ein Achsenwinkel dieser kegeligen Stirnräder (Antriebsritzel 17 und Abtriebsritzel 18) gleich einem horizontalen Winkel β_{H} ist, welcher zwischen der Antriebsstranglängsachse (50) und einer Gelenkwellenlängsachse der Gelenkwelle (10) aufgespannt wird.

7. Längs eingebauter Antriebsstrang nach Patentanspruch 5, **dadurch gekennzeichnet,**
**dass** das Vorderachsgetriebe (15) als Kegelritzel-Tellerrad-Differential mit einem Achsenwinkel (α₁ bzw. α₂) ausgestaltet ist, welcher um einen horizontalen Winkel (β_{H}) kleiner als 90° ist, wobei der horizontalen Winkel (β_{H}) zwischen der Antriebsstranglängsachse (50) und einer Gelenkwellenlängsachse der Gelenkwelle (10) aufgespannt wird.

8. Längs eingebauter Antriebsstrang nach Patentanspruch 6, **dadurch gekennzeichnet,**
**dass** das Vorderachsgetriebe (15) als Kegelritzel-Tellerrad-Differential mit einem Achsenwinkel (α₁ bzw. α₂) ausgestaltet ist, welcher um einen horizontalen Winkel (β_{H}) kleiner als 90° ist, wobei der horizontalen Winkel (β_{H}) zwischen der Antriebsstranglängsachse (50) und einer Gelenkwellenlängsachse der Gelenkwelle (10) aufgespannt wird.
